# EUROPEAN PATENT APPLICATION

(11) **EP 2 130 659 A1**
(43) Date of publication of application: **09.12.2009**
(21) Application number: 09161885.0
(22) Date of filing: 04.06.2009
(51) Int. Cl.: B29C 33/62, B29D 11/00

(54) **Forming die and microlens formed by using the same**

(30) Priority: 06.06.2008 JP 2008149212
(71) Applicant: Nitto Denko Corporation, Ibaraki-shi, Osaka 567-8680 (JP)
(72) Inventor: Naitou, Ryusuke, Osaka (JP)
(74) Representative: Grünecker, Kinkeldey, Stockmair & Schwanhäusser Anwaltssozietät

(57) **Abstract**

The present invention provides a forming die having a mold releasing layer formed on a die surface of the forming die, the mold releasing layer containing a fluororesin and having a film thickness of 10 to 500 nm; a production process of a microlens including forming a resin by using the forming die; and a microlens produced by the production process. The forming die is capable of transferring a precise shape of a die surface of the forming die to optical parts as designed.

## Description

### FIELD OF THE INVENTION

The present invention relates to a forming die, a production process of a microlens, and a microlens.

### BACKGROUND OF THE INVENTION

In JP-A-2007-63482, there has been disclosed that an aqueous composition of a fluorine-containing polymer is applied as a release agent to a die surface of a forming die to form a coating film. However, the coating film described in JP-A-2007-63482 has a thickness as relatively large as 1 to 100 µm, so that it is inappropriate for formation of optical parts having a fine precise shape, such as microlenses, optical waveguides and optical elements. That is to say, when the thickness is large, it is difficult to form such a mold releasing layer that follows a fine unevenness shape of the die surface of the forming die. For example, the fine unevenness shape of the die surface of the forming die is filled up in some cases, so that the precise shape of the die surface of the forming die cannot be transferred to the optical parts as designed.

### SUMMARY OF THE INVENTION

An object of the invention is to provide a forming die which is capable of transferring a precise shape of a die surface of the forming die to optical parts as designed, a production process of a microlens using the forming die, and a microlens produced by the production process.

According to the invention, the above-mentioned object has been achieved by adjusting the film thickness of a mold releasing layer to 10 to 500 nm. Namely, the present invention provides the following items.
1. A forming die comprising a mold releasing layer formed on a die surface of the forming die, the mold releasing layer comprising a fluororesin and having a film thickness of 10 to 500 nm.
2. The forming die according to item 1, wherein the fluororesin is selected from the group consisting of polytetrafluoroethylene, a tetrafluoroethylene/hexafluoropropylene copolymer and a tetrafluoroethylene/perfluoro(alkyl vinyl ether) copolymer.
3. The forming die according to item 1 or 2, wherein the mold releasing layer has a surface roughness (Ra) of 1 to 50 nm.
4. The forming die according to any one of items 1 to 3, wherein a base material forming the forming die is selected from the group consisting ofNi, Al, a blue plate glass, quartz, a silicon wafer, a polyimide and a polycarbonate.
5. The forming die according to any one of items 1 to 4, wherein the mold releasing layer is formed by applying a dispersion containing the fluororesin to the die surface of the forming die, followed by drying and burning.
6. The forming die according to item 5, wherein the dispersion has a viscosity at 25°C of 1 to 2 mPa·s.
7. A process for producing a microlens, which comprises forming a resin by using the forming die according to any one of items 1 to 6 to thereby obtain a microlens.
8. The process according to item 7, wherein the resin is a styrenic polymer.
9. A microlens produced by the process according to item 7 or 8.

According to the invention, there can be provided a forming die which is capable of transferring a precise shape of a die surface of the forming die to optical parts as designed, a production process of a microlens using the forming die, and a microlens produced by the production process.

The forming die of the invention can be suitably used, for example, for formation of optical parts such as microlenses, optical waveguides and optical elements.

### DETAILED DESCRIPTION OF THE INVENTION

The present invention will be described in detail hereinbelow.

In the forming die of the invention, a mold releasing layer containing a fluororesin and having a film thickness of 10 to 500 nm is formed on a die surface of the forming die. In the invention, the term "die surface of forming die" means, for example, a surface of the forming die having a shape opposite to a predetermined microlens shape, when used for production of a microlens. The term "mold releasing layer" means a layer which is formed on the die surface of the forming die, and is capable of easily releasing an object to be formed from the forming die, and is capable of transferring the precise shape of the die surface of the forming die to the microlens as designed.

In the invention, a base material forming the forming die is preferably selected from Ni, Al, a blue plate glass, quartz, a silicon wafer, a polyimide and a polycarbonate. For example, a surface thereof is processed into a predetermined shape by using a method such as electron beam drawing, cutting or laser irradiation, thereby being able to obtain the molding die. Further, the forming die can also be obtained by using a method of electroforming Ni, Al or the like to an original production master having a predetermined shape. Above all, from the viewpoint of productivity that the large area can be relatively easily prepared at once, it is preferred to use a Ni forming die obtained by metal plating using electroforming.

In a preferred embodiment of the invention, the production process of a forming die includes steps of (a) preparing an original production master having the same shape as that of a microlens and (b) preparing the forming die having a shape opposite to that of the microlens by using the original production master.

In the step (a), the original production master is preferably a blue plate glass, quartz, a silicon wafer, a polyimide or the like. Further, the original production master can be processed into the same shape as that of a predetermined microlens by using a method such as electron beam drawing, exposure, cutting or laser irradiation. It is preferred that the microlens as used herein has a diameter of 2 to 100 µm and a height of 2 to 100 µm.

In the step (b), the forming die having the shape opposite to that of the original production master having the same shape as that of the microlens can be prepared by electroplating a surface of the original production master with a metal by electroforming using Al, Ni or the like, and then, releasing the plated metal from the original production master.

In the invention, the mold releasing layer may be any layer, so long as it is such a layer as can be formed on the die surface of the forming die to produce a fine optical member. Preferably, it is formed by applying a dispersion containing the fluororesin described later to the die surface of the forming die, followed by drying and burning.

The fluororesin is preferably selected from the group consisting of polytetrafluoroethylene (PTFE), a tetrafluoroethylene/hexafluoropropylene copolymer (FEP) and a tetrafluoroethylene/perfluoro(alkyl vinyl ether) copolymer (PFA). From the viewpoint of melt processability, a tetrafluoroethylene/hexafluoropropylene copolymer (FEP) and a tetrafluoroethylene/perfluoro(alkyl vinyl ether) copolymer (PFA) are preferred, and further, from the viewpoint of surface roughness, a tetrafluoroethylene/hexafluoropropylene copolymer (FEP) is preferred.

Further, fluororesin is preferably in the shape of a particle, because it is applied as a dispersion, and then dried and burnt.

The average particle size of the fluororesin particles is preferably from 50 to 500 nm, and more preferably 50 to 250 nm, from the viewpoints of thickness reduction and surface roughness of the mold releasing layer. The average particle size can be measured by using ELS-8000 manufactured by Otsuka Electronics Co., Ltd.

The fluororesin particles are preferably contained in the dispersion. A medium of the dispersion is not particularly limited, so long as it is a liquid in which the fluororesin particles can be dispersed. For example, water is preferred.

The concentration of the fluororesin particles in the dispersion is preferably from 0.1 to 3% by weight, more preferably from 0.2 to 3% by weight, and still more preferably from 1 to 3% by weight, from the viewpoints of thickness reduction of the mold releasing layer and releasability of a formed article.

The viscosity at 25°C of the above-mentioned dispersion is preferably from 1 to 2 mPa·s, and more preferably from 1 to 1.4 mPa·s, from the viewpoint of thickness reduction of the mold releasing layer. The viscosity can be measured by using HAAKE Rheo Stress 600 manufactured by Thermo HAAKE GmbH.

The above-mentioned dispersion may contain an optional component such as a polyoxyethylene alkyl ether as a surfactant within the range where the effect of the invention is not impaired.

A method for applying the above-mentioned dispersion is not particularly limited, so long as it is a usual method such as a dip coating method, spin coating method or a spray coating method.

A drying method is not particularly limited, so long as it is performed under conditions where the medium of the dispersion evaporates. Usually, it is preferably performed at 60 to 300°C for 1 to 60 minutes.

A burning method is not particularly limited, so long as it is performed at a temperature at which the fluororesin particles are melted. Usually, it is preferably performed at 260 to 380°C for 5 to 30 minutes. Insufficient melting results in the occurrence of cracks in the resulting film or an increase in surface roughness of the film. Further, excessive burning results in decomposition of the fluororesin particles.

The mold releasing layer can be formed on the die surface of the forming die as described above. The film thickness of the mold releasing layer is from 10 to 500 nm, preferably from 10 to 300 nm, and more preferably from 10 to 100 nm, from the viewpoints of preparing the formed article as designed and characteristics of the formed article. The film thickness of the mold releasing layer can be measured by examining a cross section of the forming die using a transmission electron microscope. In the invention, since the mold releasing layer having a film thickness within the above-mentioned range is provided so as not to fill up the fine unevenness shape of the die surface of the forming die, the precise shape of the die surface of the forming die can be transferred to the optical parts as designed.

The surface roughness (Ra) of the mold releasing layer may be any, so long as the layer has such smoothness that light scattering is not caused. It is preferably from 1 to 50 nm (about 1/20 of the wavelength of incident light), and more preferably from 1 to 40 nm. For example, when the wavelength of incident light is 850 nm in the microlens, the surface roughness is preferably 40 nm or less. Incidentally, the surface roughness can be measured by using an atomic force microscope.

The forming die of the invention can be suitably used for formation of optical parts such as microlenses, optical waveguides and optical elements. Accordingly, the invention provides a production process of a microlens, which includes forming a resin by using the above-mentioned forming die to obtain a microlens. In a preferred embodiment of the invention, the production process of a microlens includes steps of (A) disposing the forming die with respect to the resin, and (B) forming the resin by using a press means. Further, these steps (A) and (B) may also be performed at the same time.

In the above-mentioned production process of a microlens, the resin is preferably a styrenic polymer, an epoxy-based polymer or the like from the viewpoints of heat resistance and shrinkage on curing, and is preferably a resin having a glass transition point Tg of 120°C or less from the viewpoint of formability. From the viewpoint of productivity, the resin can be used in a sheet form and can be appropriately disposed corresponding to the forming die.

Further, the pressure, the temperature and the like at the time when the resin is formed by using the press means are appropriately selected according to the resin. Furthermore, the inside of the system may be evacuated as needed. For example, when the styrenic polymer is used, it is preferred from the viewpoint of microlens shape transferability that press forming is performed under conditions of a degree of vacuum of 10 hPa or less, a pressure of 0.2 MPa or more, a temperature of 140°C or more and a period of time for 2 minutes or more.

In addition, the invention provides a microlens produced by the above-mentioned production process. For example, it is preferred that the microlens has a lens diameter of 2 to 100 µm and a lens height of 2 to 100 µm. Further, when the microlens is formed, the film thickness of the mold release layer is from 10 to 500 nm, and preferably from 10 to 300 nm. When the film thickness is smaller than 10 nm, releasability at the time of press forming tends to decrease. On the other hand, when it is larger than 300 nm, brightness of the microlens tends to decrease.

### Examples

### Example 1

In order to prepare an original production master having the same shape as that of a microlens, a polyimide original production master was processed into a microlens shape having a diameter of 10 µm and a height of 5 µm by using an excimer laser. Then, Ni electroforming was performed by using the processed original production master to prepare a Ni forming die (5 cm long × 5 cm wide × 120 µm thick) having a shape opposite to the microlens shape. Thereafter, a dispersion obtained by diluting a FEP-containing aqueous dispersion (FEP-120JR, manufactured by Du Pont-Mitsui Fluorochemicals Co., Ltd., average particle size: 210 nm) with water to a viscosity of 1.0 mPa·s (25°C) and a FEP concentration of 0.1% by weight was applied to a die surface of the Ni forming die by a spin coating method, followed by drying at 80°C for 5 minutes and further burning at 350°C for 15 minutes, thereby forming a mold releasing layer having a film thickness of 10 nm to obtain a forming die. Incidentally, the surface roughness of the mold releasing layer was 5 nm.

After this forming die was disposed with respect to a polystyrene sheet, press forming was performed by using a vacuum press machine, V130 manufactured by Nichigo-Morton Co., ltd., at a degree of vacuum of 5 hPa, a pressure of 0.5 MPa and a temperature of 160°C for 2 minutes to produce a microlens. The microlens thus produced was placed on a display panel, and the brightness was evaluated by using a brightness photometer (BM-9, manufactured by Topcon Technohouse Corporation), adjusting the detection angle to the range of 0.2° to just above the panel and the distance between the panel and the brightness photometer to 350 mm. The amount of increase in brightness could be judged to be 70% or more, so that it was confirmed that the microlens was formed as designed, corresponding to the precise shape of the die surface of the forming die.

### Example 2

A forming die on which a mold releasing layer having a film thickness of 50 nm was formed was obtained in the same manner as in Example 1 with the exceptions that the viscosity of the dispersion was changed to 1.2 mPa·s (25°C) and that the concentration of FEP in the dispersion was changed to 0.2% by weight. Incidentally, the surface roughness of the mold releasing layer was 5 nm. Further, a microlens was produced in the same manner as in Example 1. For the microlens produced, the brightness was evaluated in the same manner as in Example 1. The amount of increase in brightness could be judged to be 70% or more, so that it was confirmed that the microlens was formed as designed, corresponding to the precise shape of the die surface of the forming die.

### Example 3

A forming die on which a mold releasing layer having a film thickness of 300 nm was formed was obtained in the same manner as in Example 1 with the exceptions that the viscosity of the dispersion was changed to 1.4 mPa·s (25°C), that the concentration of FEP in the dispersion was changed to 1% by weight, and that a dip coating method was used. Incidentally, the surface roughness of the mold releasing layer was 5 nm. Further, a microlens was produced in the same manner as in Example 1. For the microlens produced, the brightness was evaluated in the same manner as in Example 1. The amount of increase in brightness could be judged to be 70% or more, so that it was confirmed that the microlens was formed as designed, corresponding to the precise shape of the die surface of the forming die.

### Example 4

A forming die on which a mold releasing layer having a film thickness of 500 nm was formed was obtained in the same manner as in Example 3 with the exceptions that the viscosity of the dispersion was changed to 1.5 mPa·s (25°C) and that the concentration of FEP in the dispersion was changed to 2.6% by weight. Incidentally, the surface roughness of the mold releasing layer was 5 nm. Further, a microlens was produced in the same manner as in Example 1. For the microlens produced, the brightness was evaluated in the same manner as in Example 1. The amount of increase in brightness could be judged to be 70% or more, so that it was confirmed that the microlens was formed as designed, corresponding to the precise shape of the die surface of the forming die.

### Example 5

A forming die on which a mold releasing layer having a film thickness of 300 nm was formed was obtained in the same manner as in Example 3 with the exceptions that a PFA-containing aqueous dispersion (Neoflon PFA Dispersion AD2CR manufactured by Daikin Industries Ltd., average particle size: 500 nm) was used, that the viscosity of the dispersion was adjusted to 1.4 mPa·s (25°C), and that the concentration of PFA in the dispersion was adjusted to 2.5% by weight. Incidentally, the surface roughness of the mold releasing layer was 50 nm. Further, a microlens was produced in the same manner as in Example 1. For the microlens produced, the brightness was evaluated in the same manner as in Example 1. The amount of increase in brightness could be judged to be 70% or more, so that it was confirmed that the microlens was formed as designed, corresponding to the precise shape of the die surface of the forming die.

### Comparative Example 1

A forming die on which a mold releasing layer having a film thickness of 5 nm was formed was obtained in the same manner as in Example 1 with the exceptions that the viscosity of the dispersion was changed to 0.9 mPa·s (25°C) and that the concentration of FEP in the dispersion was changed to 0.02% by weight. Incidentally, the surface roughness of the mold releasing layer was 5 nm. Further, a microlens was produced in the same manner as in Examples 1. However, the mold releasing layer formed on a die surface of the forming die was partially thinned, so that releasability from the forming die decreased to cause a defect that the microlens was not partially formed, thereby resulting in a 15% decrease in brightness.

### Comparative Example 2

A forming die on which a mold releasing layer having a film thickness of 700 nm was formed was obtained in the same manner as in Example 3 with the exceptions that the viscosity of the dispersion was changed to 2.1 mPa·s (25°C) and that the concentration of FEP in the dispersion was changed to 10% by weight. Incidentally, the surface roughness of the mold releasing layer was 5 nm. A microlens was produced in the same manner as in Example 1. However, the mold releasing layer formed on a die surface of the forming die was formed thick, so that the microlens was not formed as designed, corresponding to the precise shape of the die surface of the forming die, thereby resulting in a 10% decrease in brightness.

Incidentally, in Examples 1 to 5 and Comparative Examples 1 and 2, the film thickness of the mold releasing layer was measured by using a transmission electron microscope (manufactured by Hitachi, Ltd.), and the surface roughness of the mold releasing layer was measured by using an atomic force microscope (manufactured by Veeco Instruments, Japan).

**Table 1**

| | Example 1 | Example 2 | Example 3 | Example 4 | Example 5 | Comparative Example 1 | Comparative Example 2 |
|---|---|---|---|---|---|---|---|
| Film Thickness of Mold Releasing Layer (nm) | 10 | 50 | 300 | 500 | 300 | 5 | 700 |
| Fluororesin | FEP | FEP | FEP | FEP | PFA | FEP | FEP |
| Viscosity of Dispersion (mPa·s) | 1.0 | 1.2 | 1.4 | 1.5 | 1.4 | 0.9 | 2.1 |
| Coating Method of Dispersion | Spin coating | Spin coating | Dip coating | Dip coating | Dip coating | Spin coating | Dip coating |
| Surface Roughness of Mold Releasing Layer (nm) | 5 | 5 | 5 | 5 | 50 | 5 | 5 |

While the present invention has been described in detail and with reference to specific embodiments thereof, it will be apparent to one skilled in the art that various changes and modifications can be made therein without departing from the scope thereof.

This application is based on Japanese patent application No. 2008-149212 filed on June 6, 2008, the entire contents thereof being hereby incorporated by reference.

## Claims

1. A forming die comprising a mold releasing layer formed on a die surface of the forming die, the mold releasing layer comprising a fluororesin and having a film thickness of 10 to 500 nm.

2. The forming die according to claim 1, wherein the fluororesin is selected from the group consisting of polytetrafluoroethylene, a tetrafluoroethylene/hexafluoropropylene copolymer and a tetrafluoroethylene/perfluoro(alkyl vinyl ether) copolymer.

3. The forming die according to claim 1 or 2, wherein the mold releasing layer has a surface roughness (Ra) of 1 to 50 nm.

4. The forming die according to any one of claims 1 to 3, wherein a base material forming the forming die is selected from the group consisting of Ni, Al, a blue plate glass, quartz, a silicon wafer, a polyimide and a polycarbonate.

5. The forming die according to any one of claims 1 to 4, wherein the mold releasing layer is formed by applying a dispersion containing the fluororesin to the die surface of the forming die, followed by drying and burning.

6. The forming die according to claim 5, wherein the dispersion has a viscosity at 25°C of 1 to 2 mPa·s.

7. A process for producing a microlens, which comprises forming a resin by using the forming die according to any one of claims 1 to 6 to thereby obtain a microlens.

8. The process according to claim 7, wherein the resin is a styrenic polymer.

9. A microlens produced by the process according to claim 7 or 8.
